# EUROPEAN PATENT APPLICATION

(11) **EP 1 930 847 A1**
(43) Date of publication of application: **11.06.2008**
(21) Application number: 06125498.3
(22) Date of filing: 06.12.2006
(51) Int. Cl.: G06Q 10/00

(54) **Simplified support of real world objects in computer based control systems**

(71) Applicant: ABB RESEARCH LTD., 8050 Zürich (CH)
(72) Inventor: Mathiesen, Mogens, S-0308 Oslo (NO); Svensson, Stefan, Västerås S-72210 (SE); Öberg, Pierre, Västerås S-72353 (SE)
(74) Representative: Dahlstrand, Björn

(57) **Abstract**

The invention concerns a method, device and computer program product for connecting a user in a computer based system for process or manufacturing control to a correct support instance (48, 50) in relation to a real world object (16) needing support as well as to such a computer based system. The device includes an object determining unit (30) that obtains technical data of a real world object needing support, possibly together with location related data, from a database (22), and a support instance determining unit (44) that determines a group of appropriate support instances (48, 50) for the object, sends the obtained data regarding the object to a support instance (48, 50) selected from the group, and at least initiates the establishing of communication between the user and the selected support instance (48, 50), in order to allow support to be supplied to the user concerning the object.

## Description

### TECHNICAL FIELD OF THE INVENTION

The present invention relates to the provision of support of real world objects provided in a computer based system for process or manufacturing control. The invention more particularly relates to a method, device and computer program product for connecting a user in a computer based system for process or manufacturing control to a correct support instance in relation to a real world object needing support as well as to such a computer based system for process or manufacturing control.

### DESCRIPTION OF RELATED ART

Object based computerised systems are known to be used for controlling manufacturing and process industries, such as chemical plants, oil refineries, pulp and paper mills, steel mills, etc.

In these systems real world objects may be used to control the processes. However these objects are subject to wear and tear, which may lead to faulty operations. A faulty operation may also occur when restarting such a system after being shut down. In all these instances such an object should be replaced, repaired or perhaps reinitiated. They may in short be the subject of service of some kind. It is here furthermore possible that an operator investigating such a device cannot perform the appropriate action himself, but has to refer to some support instance. However, when an operator in such a system that locates such a malfunction of an object is to get assistance, it is often hard to know where to turn, especially if the operator is not at his computer but out on the floor inspecting the object. There is thus a problem of determining the correct support instance. Furthermore, once the correct support instance has been located, this support instance is to be supplied with the correct technical information about the object, like error logs and technical data about the object in question, such as brand, type, size and other technical data. This data may very well also be hard to obtain in a simple manner. If the support instance is an external support instance, i.e. a support instance that is not part of the company operating the process, there is furthermore a cost aspect involved. The costs are lowered if the support instance is supplied with the necessary data about the object from the beginning. There may furthermore be special rates regarding to how an external support instance is approached if additional costs are to be avoided.

There is therefore a need for simplifying the locating of a correct support instance and also provide this support instance with the relevant information for providing efficient support.

### SUMMARY OF THE INVENTION

The present invention is therefore directed towards simplifying the locating of a correct support instance and also towards providing this support instance with the relevant information for providing efficient support.

One object of the present invention is therefore to provide a method for connecting a user in a computer based system for process or manufacturing control to a correct support instance in relation to a real world object needing support for simplifying the provision of support for the object.

This object is according to a first aspect of the present invention achieved through a method for connecting a user in a computer based system for process or manufacturing control to a correct support instance in relation to a real world object needing support comprising the steps of:
obtaining technical data regarding the real world object, possibly together with location related data, from a database comprising data of real world objects in the system, determining a group of appropriate support instances for said object including at least one support instance,
at least initiating the sending of said obtained data regarding the real world object to a support instance selected from said group, and
at least initiating the establishing of communication between the user and said selected support instance, in order to allow support to be supplied to the user concerning said object.

Another object of the present invention is to provide a device for connecting a user in a computer based system for process or manufacturing control to a correct support instance in relation to a real world object needing support for simplifying the provision of support for the object.

This object is according to a second aspect of the present invention achieved through a device for connecting a user in a computer based system for process or manufacturing control to a correct support instance in relation to a real world object needing support, comprising:
an object determining unit configured to obtain technical data of a real world object needing support, possibly together with location related data, from a database comprising data of real world objects, and
a support instance determining unit configured to:
   determine a group of appropriate support instances for said object including at least one support instance,
   at least initiate a sending of said obtained data regarding the real world object to a support instance selected from said group, and
   at least initiate the establishing of communication between the user and said selected support instance, in order to allow support to be supplied to the user
   concerning said object.

Another object of the present invention is to provide a computer based system for process or manufacturing control that simplifies the provision of support for a real world object needing support.

This object is according to a third aspect of the present invention achieved through a computer based system for process or manufacturing control, comprising:
a real world object needing support,
a database comprising data of real world objects,
an object determining unit configured to obtain technical data regarding the real world object, possibly together with location related data, from said database, and
a support instance determining unit configured to:
   determine a group of appropriate support instances for said object including at least one support instance,
   at least initiate a sending of said obtained data regarding the real world object to a support instance selected from said group, and
   at least initiate the establishing of communication between the user and said selected support instance, in order to allow support to be supplied to the user concerning said object.

Another object of the present invention is to provide a computer program product for connecting a user in a computer based system for process or manufacturing control to a correct support instance in relation to a real world object needing support for simplifying the provision of support for the object.

This object is according to a fourth aspect of the present invention achieved through a computer program product for connecting a user in a computer based system for process or manufacturing control to a correct support instance in relation to a real world object needing support, comprising computer program code to make a computer perform when said code is loaded into said computer:
obtain technical data regarding the real world object, possibly together with location related data, from a database comprising data of real world objects in the system, determine a group of appropriate support instances for said object including at least one support instance,
at least initiate a sending of said obtained data regarding the real world object to a support instance selected from said group, and
at least initiate the establishing of communication between the user and said selected support instance, in order to allow support to be supplied to the user concerning said object.

The present invention has many advantages. A user may in a simple way connect to an appropriate support instance for performing support of a real world object. The user may furthermore do this without having to locate the necessary data himself or manually try to locate the correct person or entity for obtaining support. This means that the present invention is very user friendly. It also allows the provision of faster and more efficient support. If the system or a part of the system is down because of the needed support, such down time of the system may also be reduced.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows a simplified computer based system for process control comprising a number of different levels, where one level is a field device level, another level is a control level and a third is an operator terminal level,
fig. 2 shows a block schematic of a client application in an operator terminal communicating with a first server where computer objects are provided in the form of a container with aspects linked to the container together with a table for locating aspects, fig. 3 outlines a structure of hierarchical objects corresponding to containers as presented by an operator terminal,
fig. 4 generally outlines a handheld terminal connected to the first server as well as to a an internal communication network for communication with a support instance determining unit, which in turn is connected to a support instance database, and an external support instance that can be reached via an external communication networks,
fig. 5 shows a flow chart outlining a number of method steps taken in a method of connecting a user in a computer based system for process or manufacturing control to a correct support instance according to the present invention, and
fig. 6 schematically shows a computer program product in the form of a CD ROM disc comprising computer program code for carrying out a method of the present invention.

### DETAILED DESCRIPTION OF EMBODIMENTS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

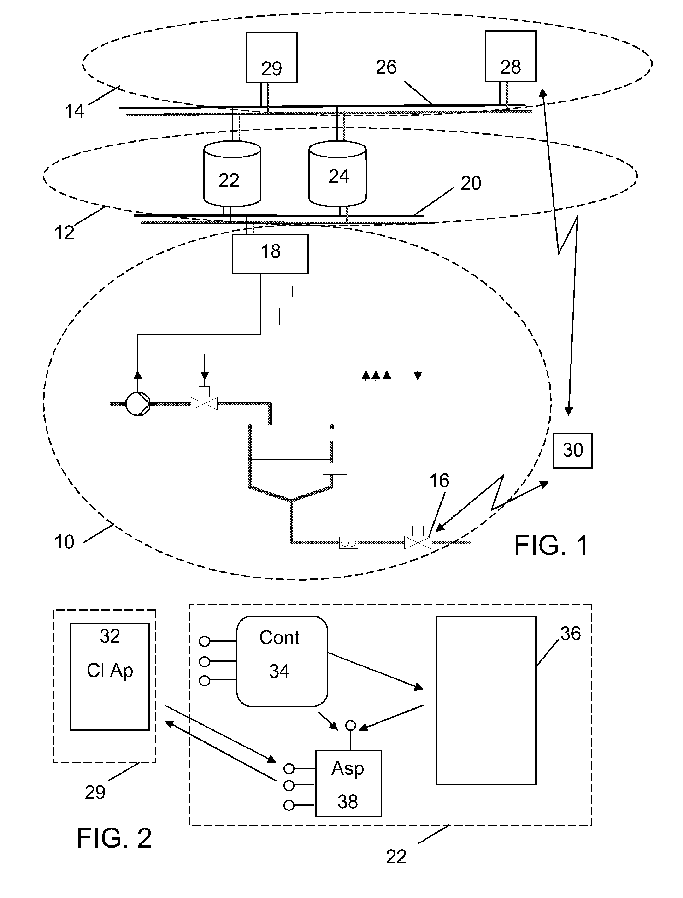

Fig. 1 schematically shows a system for process and manufacturing control. The system is typically an object based computerised system for controlling a process or perhaps part of a process. Typical processes are electrical power generation and supply process, water purification and distribution processes, oil and gas production and distribution processes, petrochemical, chemical, pharmaceutical and food processes, and pulp and paper production processes. These are just some examples of processes where the system can be applied. There exist countless other processes. The system in fig. 1 is divided into a field device level 10, a control device level 12 and an operator terminal level 14. Normally in the field device level 10 there may be one or more controllers having some local software for controlling one or more real world objects in a process. The real world objects may be different field devices that influence the technical process, like such things as a pump, a motor, a valve, etc., or a more abstract object such as a purchase order, production batch, etc. A real world object may however also be another type of object not directly involved in the control of a process or of manufacturing. A process, or a part of a process, may be controlled via a server, which then typically communicates with a controller for providing control of a process. The process may be monitored through an operator terminal which communicates with the server.

In fig. 1 the system therefore includes an operator terminal 29 in the operator terminal level that is connected to a first bus 26. This first bus 26 also makes up an interface to the control level 12.To this bus there is also connected a wireless access point 28 for enabling wireless access to the operator terminal 28 as well as to other entities of the network. In the control level 12 there is a first server 22 comprising computer objects providing control of the process and a second server 24 providing an application controlling the process through invoking objects in the first server 22. The two servers are here connected to both the first bus 26 as well as to a second bus 20, which bus 20 is also an interface to the field device level 10. In the field device level 10 there is provided a controller 18 (Process Controller or Programmable Logic Controller (PLC) connected to the second bus 20 for providing control in the field device level 10. In this level 10 a controller 18 is typically connected to one or more field devices for providing this control. As an example the controller 18 is shown as being connected to a process section, which process section includes an inlet pipe leading to a tank and an outlet pipe leaving the tank. In the inlet pipe there is provided a pump that pumps fluid into the inlet pipe as well as a first valve. In the tank there are provided two level sensors and in the outlet pipe there is provided a flow meter and a second valve 16. Said controller 18 receives control input values from the pump and level sensors and regulates the fluid level in the tank based on these control input values through controlling the first valve. It also receives control input values from the flow meter and controls the second valve 16 for regulating the output fluid flow. These entities are thus examples of real world objects that are here also field devices. In fig. 1 there is finally shown a first portable handheld terminal 30 often also denoted HMI (Human Machine Interface), which is in wireless communication with the field device 16, as well as with the wireless access point 28 for accessing other entitities of the system. The first handheld terminal 30 is provided with at least some of the functionalities of the operator terminals.

As mentioned above the field devices as well as other real world objects are controlled by computer objects provided in the first server 22. The system and the process section shown in fig. 1 is furthermore just an example. It should be realised that there might be more or fewer controllers, several different operator terminals, several different engineering terminals and perhaps also several different servers. If the system is small it is furthermore possible to have all server functionality and operator terminal functionality in the same physical computer.

The computer objects are normally grouped in a special way. In order to control the real world objects of a process, containers may be used, where there is one container for each real world object. Fig. 2 shows a block schematic of the operator terminal 29 comprising a client application 32 in contact with the first server 22 comprising a container Cont 34, an aspect Asp 38 and an aspect lookup table 36. It should be realised that the client application 22 may as an alternative be provided in the first or the second server 22 or 24 and be reached by an operator terminal. One particular client application to be described in more detail later working according to these principles is according to one variation of the present invention also provided in the first hand held terminal. The container 34 is here a so-called COM object having a number of interfaces, where three are shown in fig. 2. COM is an existing published standard and as such is a part of the prior art. More information about COM may for instance be found in the Microsoft MSDN Online Library on the web site maintained by Microsoft. Additional information about COM may also be found in, amongst others, an article in Dr. Dobbs Journal December 1994 entitled The Component Object Model: Technical Overview.

Through these interfaces, the client application 32 can invoke a function that is related to an aspect that is held by the container 34. The client application 32 does this by querying the container 34 for an interface to this function, without knowing the identity of the application that implements the function for which it is seeking an interface. If the container has an aspect that supports the interface then a reference to the interface is returned as some form of pointer to where that interface may be found.

The container Cont 34 thus holds a number of aspects, of which one Asp 38 is shown in fig. 2. Each aspect, which in this embodiment is also provided as a COM object, is related to the real world object. An aspect represents one facet of the real world object, and is responsible for all operations on that facet of the object and its data. Thus for the second valve in fig. 1, one aspect could represent a physical location, another aspect could represent a blue print diagram of the valve, another a security descriptor for the valve, another aspect could represent a control for an operation of the valve, another aspect could represent documentation about the valve and yet another could represent historical and/or log data of the valve, for instance if it has been malfunctioning, how many times and when service has been performed. The aspect that represents the facet has an association to a function of an application that can, referring to the above example, display the blue-print diagram, or control the operation of the valve.

The container 34 furthermore has access to an aspect lookup table 36, through which it may locate an aspect.

Thus the client application 32 when needing to access a facet of the real world object connects to the container 34 and requests an interface associated with said facet. The container then locates an aspect 38 associated with the facet via the aspect table 36, interrogates the aspect regarding its interfaces, receives information of an interface and returns the interface, through which the client application 32 may connect to the aspect for retrieving data, control the real world object, etc. What has been described so far is known within the art and not a part of the present invention. This is described in further detail in WO-01/02953, which is herein incorporated by reference.

What has been described above is thus the normal known way containers and aspects function when they are provided in a system. It should however be realised that objects need not be grouped into containers and aspects, but that any object structure can be used.

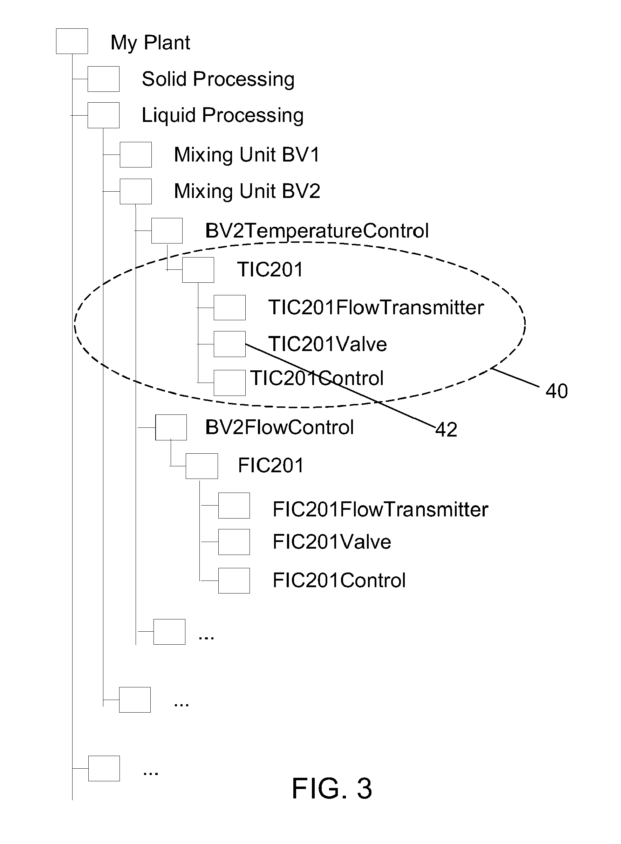

The containers are often organized in hierarchical structures that may be viewed via an application. Fig. 3 shows an example of a number of objects where a first highest level is named My Plant. In a second level there are two objects named Solid Processing and Liquid Processing both linked to the object My Plant. In a third level there are also two objects named Mixing Unit BV1 and Mixing Unit BV2 linked to the object named Liquid Processing. In a fourth level there are provided two objects BV2Temperature Control and BV2FlowControl, both linked to the object Mixing Unit BV2. In a fifth level there are provided two objects TIC201 and FIC201, where the object named TIC201 is linked to the object BV2TemperatureControl and the object FIC201 is linked to the object BV2FlowControl. In a sixth level there are provided objects named TIC201 FlowTransmitter, TIC201Valve and TIC201Control all linked to the object TIC201, where these objects TIC201 FlowTransmitter, TIC201 Valve, TIC201 Control and TIC201 are shown as a substructure 40. The object TIC201 Valve here corresponds to the second valve 42 in fig. 1 as is indicated in the drawing. In the sixth level there are finally provided objects named FIC201 FlowTransmitter, FIC201Valve and FIC201 Control all linked to the object FIC201. The objects are here related to at least some of the real world object in the process section of fig. 1. It should here be realised that this structure is only exemplifying of a control related structure and that other types of structures can also be used, like a functional structure based on processes, or a location structure based on buildings and rooms.

An operator may thus see the objects of fig. 3 via his client application provided in the operator terminal. It is furthermore possible that this may be viewed via the handheld terminal of fig. 1 if it is provided with such an application or is able to communicate with such an application provided elsewhere in the system.

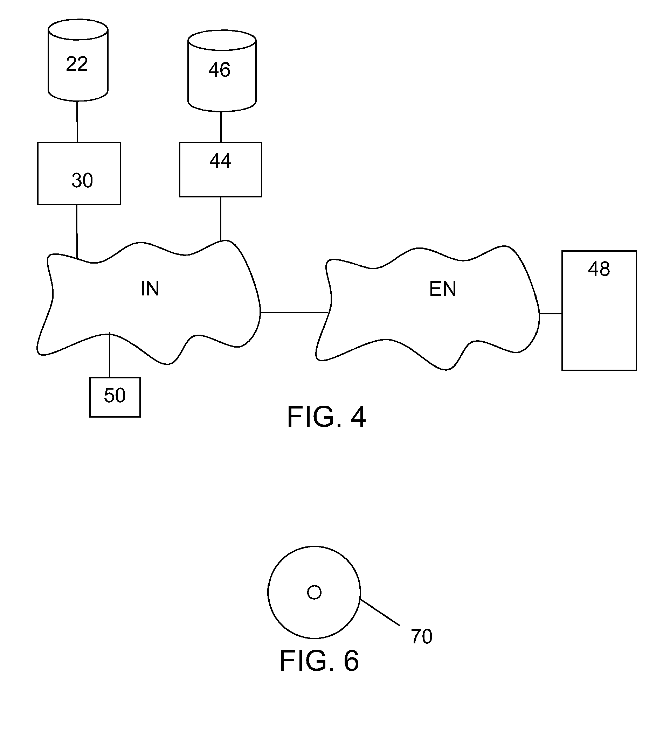

Fig. 4 schematically shows the first hand held terminal 30 connected to the first server 22 and to an internal communication network IN. To this network IN, a support instance determining unit 44 and a second handheld terminal 50 are furthermore connected. The support instance determining unit 44 is in turn is connected to a support instance database 46, while the internal network IN is connected to an external communication network EN. The first hand held terminal 30 here includes a client application, which in the present case is also termed an object determining unit. In fact the combination of client application and device that includes such a specialised application, which device is here the first handheld terminal 30, may be termed as an object determining unit. An external support instance 48 is finally connected to the external communication network EN. Here it should be realised that the support instance determining unit 44 may be provided in the operator terminal level or the control level of the system in fig. 1 or be provided in a separate network provided in or in relation to the same premises as the system in fig. 1. It should here also be realised that the internal communication network IN may be provided as a part of the system of fig. 1, but it may as an alternative be a separate communication network. Finally it should be realised that the client application and the support instance determining unit may be provided in the same device or physical entity, which may also be in the fist handheld terminal 30, an operator terminal or in a server in the system of fig. 1.

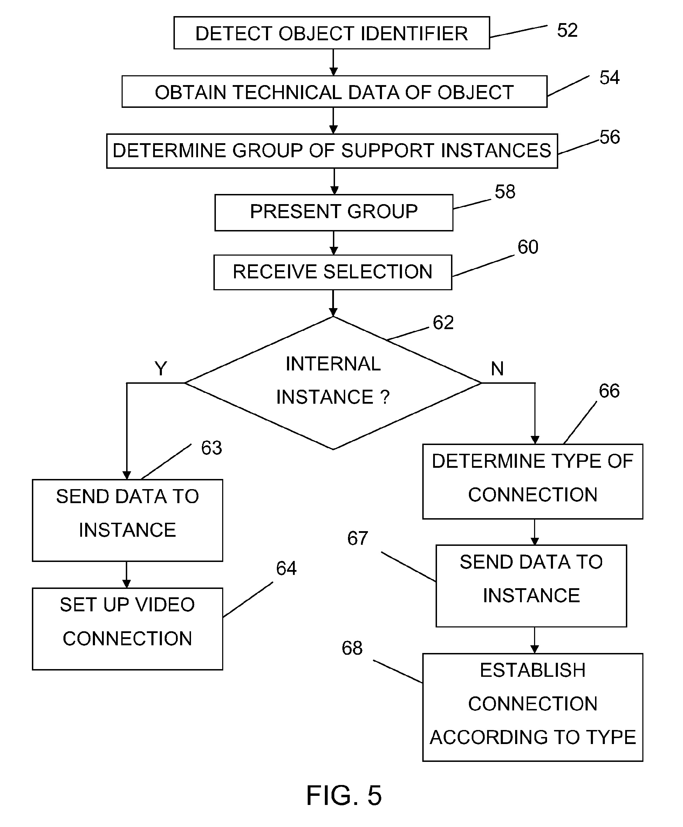

The functioning of the present invention will now be described in relation to the previously described fig. 1 - 4 as well as to fig. 5, which shows a flow chart outlining a number of method steps taken in a method of connecting a user in the system to a correct support instance according to the present invention.

It all starts with a real world object, for instance in the form of the field device 16, needing some kind of support. As mentioned above this object is not necessarily an object involved in the process. However, it is a real world object and a representation of it is provided in the first server 22. Therefore an operator moves out to this object 16 with his first hand held terminal 30. There he may detect an object identifier of the object, for instance using wireless communication with the field device 16. As an alternative it is possible that he locates the object in the structure of fig. 3 via the application 32 and clicks on the object there. When this is done the application 32 or object determining unit connects to a number of relevant aspects and retrieves or obtains technical data of the object 16, for instance type of object, manufacturer, a blueprint of the object, historic and log data regarding operation and services etc., step 54. The technical data may here be accompanied by location related data, i.e. data indicating the location of the object in a building as in a special room in a building. Thereafter a request for support including this data and possibly also with a connectivity identifier of the first hand held terminal 30 or of the user is sent to the support instance determining unit 44. The support instance determining unit 44 keeps a list of internal support instances in the form of other system users, i.e. persons associated with the system and normally employees of the company running the system, which have dealt with such an object earlier as well as keep service information regarding the object in the support instance database 46. The database 46 also has information about external support instances, like external companies, their support personnel and contact information regarding the external support instances, related to the object 16. As an alternative, such information about support instances, internal and/or external, may be provided in one or more aspects of the container 34 in the first server 22. Based on the request and the support related settings, the support instance determining unit 44 therefore determines a group of support instances, step 56, including both internal and external instances, which may thus be experts on the object, and sends this information to the first hand held terminal 30, which in turn presents the group to the operator or user, step 58. The group may include several support instances or it may include only one support instance. The user may then select one such person or instance in the group, which selection is received by the first handheld terminal 30, step 60, and forwarded to the support instance determining unit 44. The support instance determining unit 44 then investigates the selection. If the selection is to an internal instance, step 62, it then immediately sends the gathered data or makes the client application send the gathered data to the selected support instance, step 63, and at least initiates the immediate setting up of a video connection between the hand held terminal 30 and the internal support instance, step 64, where the internal support instance is here exemplified by the second hand held terminal 50. According to one variation of the present invention the support instance determining unit also sets up the connection. As an alternative it informs the first handheld terminal about where to set up the video connection, which goes on and sets up the video connection via the internal network IN. The actual connection can also be set up from the internal instance 50. The gathered data may be provided as a part of the video connection or sent separately to the internal support instance 50. It should here be realised that the internal instance could be reached via an operator terminal, a desktop or a cellular phone as well.

If however the user selected an external instance, step 62, the support instance determining unit 44 consults the database 46 and locates a service level agreement associated with the real world object 16. Based on this agreement or support related settings it then determines type of connection and to where a connection is to be made, step 66. As an example it here determines that a connection is to be set up to the external support instance 48. Different types of connections may here be video call, regular phone call, a chat window or a message as well as different types of response times. Once this has been done, the support instance determining unit 44 sends the gathered data or makes the client application send the gathered data to the selected external support instance 48, step 67, and at least initiates the establishment of a connection to the external instance 48 via the external network EN according to the selected type, step 68. In one variation of the present invention it also establishes the actual connection. It is also possible that it instructs the user or the first handheld terminal 30 to set up the connection or instructs the support instance to set up the connection. The gathered technical data about the object could here be accompanied by a connectivity identifier through which the user can be reached, for instance an message address associated with the user. The connectivity identifier can be automatically supplied by the handheld terminal 30 or through investigating a setting in it. It is also possible that that such an identifier is fetched from a user database of the system or internal network IN. The user may also manually enter such an identifier for supply to the support instance determining unit. Depending on the type of connection being set up to the support instance 48, the gathered data may be included in the connection being set up or be provided separately, for instance before the connection is being set up.

In this way the user may in a simple way connect to an appropriate support instance for performing support. The user may furthermore do this without having to locate the necessary data himself or manually try to locate the correct person or entity for obtaining support. This means that the present invention is very user friendly. It also allows the provision of faster and more efficient support. If the system or a part of the system is down because of the needed support, such down time of the system may also be reduced.

It should here be realised that if the internal instance does not respond, the user may be invited to get connected to an external support instance. It is also possible that the user does not get to select at all, but that the support instance determining unit automatically selects one and establishes a connection or initiates the establishing of a connection with such a support instance immediately upon receiving a support request. It may here also provide a priority of support instances, for instance starting with internal support instances and try to establish connection with and supply technical data to the support instances in order of priority until the user is supported.

The hand held device may advantageously be provided in a PDA (Personal Digital Assistant). The wireless communication may here be provided through a number of communication standards. Examples are IEEE 802.15.4, Wireless Hart, WLAN 802.11, Bluetooth, ZigBee or WISA. The invention has been described using COM objects. The invention is not limited to COM. Other object technologies that can be used are for instance COBRA and Java.

The device according to the present invention, i.e. both the support instance determining unit, and the object determining unit may each be implemented through one or more processors together with computer program code for performing its functions. The program code mentioned above may also be provided as a computer program product, for instance in the form of one or more data carriers carrying computer program code for performing the functionality of the present invention when being loaded into the computer. One such carrier 70, in the form of a CD ROM disc is generally outlined in fig. 6. It is however feasible with other data carriers, like diskettes, memory sticks or USB memories. The computer program code can furthermore be provided as pure program code on an external server and fetched from there for provision in the device that is to receive it.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the present invention is only to be limited by the following claims.

## Claims

1. Method for connecting a user in a computer based system (10, 12, 14) for process or manufacturing control to a correct support instance (48, 50) in relation to a real world object (16) needing support comprising the steps of:
obtaining (54) technical data regarding the real world object (16), possibly together with location related data, from a database (22) comprising data of real world objects in the system,
determining (56) a group of appropriate support instances (48, 50) for said object including at least one support instance,
at least initiating the sending (63, 67) of said obtained data regarding the real world object to a support instance (48, 50) selected from said group, and
at least initiating the establishing (64, 68) of communication between the user and
said selected support instance, in order to allow support to be supplied to the user concerning said object.

2. Method according to claim 1, wherein said step of obtaining technical data is performed in an object determining unit (30, 32) and the step of determining an appropriate support instance is performed in a support instance determining unit (44), and further comprising the step of sending a request for support from the object determining unit (30, 32) to the support instance determining unit (44).

3. Method according to claim 1 or 2, further comprising the step of detecting (52) an object identifier (16) of the object and using this identifier when obtaining data in the database.

4. Method according to any previous claim, further comprising the step of presenting (58), for the user, the group of support instances and receiving a selection (60) of A support instance from the user.

5. Method according to any previous claim, further comprising the step of, if (62) the selected support instance is an internal support instance (50) connectable via an internal communication network (IN), immediately initiating the setting up (64) of a connection between the user and the support instance (50) via this internal network (IN).

6. Method according to any previous claim, further comprising the step of, if (62) the selected support instance is a support instance (48) accessible via an external communication network (EN), determining (66) a type of connection according to support related settings made for said object, where said step of at least initiating the establishing (68) of communication comprises initiating the establishing of communication between the user and the support instance (48) via this external network (EN) according to said support related settings.

7. Method according to claim 6, further comprising the step of obtaining a connectivity identifier of the user and providing this to the support instance for allowing communication to be established between the selected support instance and the user.

8. Method according to claim 7, further comprising the step of sending the connectivity identifier together with said obtained data to the support instance in order to initiate the establishing of communication between the support instance and the user.

9. Method according to any of claims 6-8, further comprising the step of automatically selecting the support instance and type of connection based on said support related settings.

10. Device for connecting a user in a computer based system (10, 12, 14) for process or manufacturing control to a correct support instance (48, 50) in relation to a real world object (16) needing support, comprising:
an object determining unit (30, 32) configured to obtain technical data of a real world object (16) needing support, possibly together with location related data, from a database (22) comprising data of real world objects, and
a support instance determining unit (44) configured to:
determine a group of appropriate support instances (48, 50) for said object including at least one support instance,
at least initiate a sending of said obtained data regarding the real world object to a support instance (48, 50) selected from said group, and
at least initiate the establishing of communication between the user and said selected support instance, in order to allow support to be supplied to the user concerning said object.

11. Device according to claim 11, wherein the object determining unit (30, 32) is further configured to send a request for support to the support instance determining unit (44).

12. Device according to claim 10 or 11, wherein the object determining unit (30, 32) is further configured to use a detected object identifier when obtaining data in the database (22).

13. Device according to any of claims 10-12, wherein the object determining unit (30, 32) is further configured to present, for the user, the group of support instances and receive a selection of support instance from the user.

14. Device according to any of claims 10-13, wherein the support instance determining unit is further configured to, if the selected support instance is an internal support instance (50) connectable via an internal communication network (IN), immediately initiate the setting up of a connection between the user and the support instance (50) via this internal network (IN).

15. Device according to any of claims 10-14, wherein the support instance determining unit is further configured to, if the selected support instance is a support instance (48) accessible via an external communication network (EN), determine type of connection according to support related settings made for said object and at least initiate the establishing of communication between the user and the support instance (48) via this external network (EN) according to said support related settings.

16. Device according to claim 15, wherein the support instance determining unit (44) is further configured to obtain a connectivity identifier of the user and provide this to the support instance for allowing communication to be established between the selected support instance and the user.

17. Device according to claim 16, wherein the support instance determining unit (44) is further configured to send the connectivity identifier together with said obtained data to the support instance in order to initiate the establishing of communication between the support instance and the user.

18. Device according to any of claims 15 - 17, wherein the support instance determining unit (44) is further configured to automatically select the support instance and type of connection based on said support related settings.

19. Computer based system (10, 12, 14) for process or manufacturing control, comprising:
a real world object (16) needing support,
a database (22) comprising data of real world objects,
an object determining unit (30, 32) configured to obtain technical data regarding the real world object (16), possibly together with location related data, from said database, and
a support instance determining unit (44) configured to:
determine a group of appropriate support instances (48, 50) for said object including at least one support instance,
at least initiate a sending of said obtained data regarding the real world object to a support instance (48, 50) selected from said group, and
at least initiate the establishing of communication between the user and said selected support instance, in order to allow support to be supplied to the user concerning said object.

20. Computer program product (70) for connecting a user in a computer based system (10, 12, 14) for process or manufacturing control to a correct support instance (48, 50) in relation to a real world object (16) needing support, comprising computer program code to make a computer perform when said code is loaded into said computer:
obtain technical data regarding the real world object (16), possibly together with location related data, from a database (22) comprising data of real world objects in the system,
determine a group of appropriate support instances (48, 50) for said object including at least one support instance,
at least initiate a sending of said obtained data regarding the real world object to a support instance selected from said group, and
at least initiate the establishing of communication between the user and said selected support instance, in order to allow support to be supplied to the user concerning said object.
